# EUROPÄISCHE PATENTSCHRIFT

(11) **EP 1 624 987 B1**
(45) Veröffentlichungstag und Bekanntmachung des Hinweises auf die Patenterteilung: **27.07.2011**
(21) Anmeldenummer: 04738505.9
(22) Anmeldetag: 12.05.2004
(51) Int. Cl.: B23B 5/02, B24B 5/06, G01M 13/04

(54) **SPANNVORRICHTUNG ZUM RADIALEN VORSPANNEN EINER RADLAGERBAUGRUPPE**
TENSIONING DEVICE FOR RADIALLY PRELOADING A WHEEL BEARING SUBASSEMBLY
DISPOSITIF DE FIXATION POUR PRE-SERRAGE RADIAL D'UN ENSEMBLE DE MONTAGE DE PALIER DE ROUE

(30) Priorität: 20.05.2003 DE 10323046
(43) Veröffentlichungstag der Anmeldung: 15.02.2006
(73) Patentinhaber: Schaeffler Technologies GmbH & Co. KG, 91074 Herzogenaurach (DE)
(72) Erfinder: ULMAN, Lothar, 97503 Gädheim (DE); BYWALEZ, Karl, 97422 Schweinfurt (DE)
(86) Internationale Anmeldenummer: PCT/DE2004/000988
(87) Internationale Veröffentlichungsnummer: WO 2004/103614

(56) Entgegenhaltungen:
- EP-A- 0 899 061
- US-A1- 2001 020 321
- US-A1- 2003 001 345
- US-B1- 6 364 426
- US-B2- 6 485 109
- KOSTYRKA P: "Einsatz geschlitzter Klemmhuelsen" WERKSTATT UND BETRIEB, CARL HANSER VERLAG. MUNCHEN, DE, Bd. 105, Nr. 4, April 1972 (1972-04), Seiten 301-303, XP002197249 ISSN: 0043-2792

## Beschreibung

### Gebiet der Erfindung

Die Erfindung betrifft eine Vorrichtung zum Vorspannen eines Radlagers gemäß dem Oberbegriff des Anspruchs 1. Solch eine Vorrichtung ist beispielsweise aus der US 2001/0020321 A1 bekannt.

### Hintergrund der Erfindung

Eine Vorrichtung zum Vorspannen eines Radlagers ist in DE 199 83 909 T1 beschrieben. An dieser Vorrichtung wird ein Radlager mit Achsschenkel aufgenommen, das zunächst noch ein Spiel zwischen dem Innenring und den Wälzkörpern sowie dem Außenring aufweist. Mit dem Innenring des Radlagers ist ein Flansch der Radlagerung fest verbunden. Dazu greift der Flansch mit einem einteilig an dem Flansch ausgebildeten hohlzylinderischen Abschnitt fest in die Bohrung des Innenringes ein. Der Achsschenkel und somit der Außenring sind rotationsfest zur Rotationsachse des Radlagers an der Vorrichtung befestigt. Ein Dorn ist konzentrisch zu den Lagerringen und zu dem Flansch durch die Bohrung des in DE 199 83 mit Radnabe bezeichneten Flansches angeordnet.

Die Vorrichtung übt eine Einspannkraft auf die Radnabe und den Innenring des Radlagers auf, um in dem Radlager die Vorspannung zu erzeugen. Die Vorspannung entspricht dabei der üblichen Betriebsvorspannung des Radlagers am Fahrzeug. Nach dem Erzeugen einer derartigen Vorspannung an dem dem Innenring wird der Dorn in Rotation versetzt und nimmt somit den Flansch um die Rotationsachse der Radlagerung rotierend mit. Der Flansch des Radlagers kann mit einer derartig vorgespannten Radlagerung nunmehr mit einer dem Fahrzeugbetrieb entsprechenden Genauigkeit bezüglich der Planlauf- bzw. Rundlaufabweichungen bearbeitet werden. Bei dieser an sich zufriedenstellenden Lösung besteht jedoch die Gefahr, dass beim axialen Vorspannen des Innenringes sich die schwächsten Stellen des Innenringes an den Laufbahnen so verformen, dass die für einen optimalen Wälzkontakt erforderliche Schmiegung in den Laufbahnen zu den Wälzkörpern nachteilig verformt wird. Gleichzeitig besteht die Gefahr, dass die Kugel beim axialen Verformen des Innenringes und beim radialen gegeneinander Vorspannen der Lagerringe durch plastische Verformung erzeugte Markierungen hinterlassen, die die Lebensdauer des Radlagers nachteilig verkürzen.

Aus US 2001/0020321 A1 ist eine Vorrichtung zur spanenden Nachbehandlung von Radlagern bekannt, bei der ein drehnder Dorn die Radnabe in Drehung versetzt, nachdem das Radlager radial eingespannt worden ist.

Aus US 2003/0001345 A1 ist eine Vorspannungseinrichtung bekannt, die zur radialen Belastung einer Radlagereinheit vorgesehen ist, während deren Radnabe in Rotation versetzt wird. Dazu werden Spannbacken verwendet, die die Radlagereineheit umfassen.

### Zusammenfassung der Erfindung

Die Aufgabe der Erfindung ist es daher, eine Vorrichtung der gattungsbildenden Art zu schaffen, mit der die vorher genannten Nachteile vermieden werden. Eine weitere Aufgabe der Erfindung besteht darin, eine Vorrichtung zu schaffen, mit der die Rundlauf- und Planlaufabweichungen am Flansch bzw. an einer mit der Radlagerung verbundenen Bremsscheibe unter Betriebsbedingungen vom Fahrzeug unabhängig geprüft werden können.

Diese Aufgabe wird mit dem Gegenstand des kennzeichnenden Teiles des Anspruches 1 gelöst.

Eine Spanneinrichtung in der Vorrichtung spannt das Radlager von außen radial in Richtung der Rotationsachse vor. Die Spanneinrichtung weist wenigstens ein gegen den Außenring bewegliches sowie zu der Vorrichtung rotationsfestes Spannelement auf. Der Außenring ist von dem/den Spannelement(en) umfangsseitig umgriffen. Das Radlager ist über den Außenring spielfrei und darüber hinaus mit derselben Vorspannung wie das am Fahrzeug montierte gleiche und fahrbetriebsfähige Radlager vorgespannt. Demnach ist das Radlager in der Vorrichtung mit der zukünftigen Betriebsvorspannung eingespannt. Verformungen an der Geometrie der Laufbahnen infolge axialer Vorspannungen sind vermieden, da der Außenring wahlweise zumindest teilweise plastisch sowie elastisch oder vorzugsweise nur elastisch in der Vorrichtung radial von außen eingeschnürt, das heißt in seinem Durchmesser verringert ist.

Eine Vorraussetzung dafür, dass das Radlager radial vorgespannt werden kann sind axial relativ zum Radlager und zueinander axial festgesetzte und somit axial unbewegliche Innenringe des Radlagers, wenn statt nur einem zwei der Innenringe im Radlager eingesetzt sind. Die Innenringe sind zum Beispiel mittels des Flanschabschnittes, auf dem diese sitzen, axial zueinander fest. Dafür wird beispielsweise an dem Abschnitt ein axial wirkender Bördelbord, auch Wälznietverbund genannt, erzeugt, der die Innenringe axial gegeneinander vorspannt und diese aneinander hält. Einzelne, nicht mit einem derartigen Abschnitt verspannte Innenringe sind z.B. durch Spannschrauben axial zueinander verspannt und fixiert.

Nach dem Entfernen des Radlagers bzw. der Radlagereinheit aus der Vorrichtung federt der Außenring wieder so weit auf, wie dieser in der Vorrichtung elastisch vorgespannt wurde, so dass die Radlagerung nach dem Entfernen aus der Vorrichtung wieder das anfangs vorgelegene Spiel aufweist. Gewollt plastische Verformungen des Außenringes verbleiben.

Für die erfindungsgemäße Vorrichtung sind zwei Verwendungen vorgesehen. Zum einen wird der Flansch an der mit der Betriebsspannung in der Vorrichtung eingespannten Radlagereinheit mit einer hohen Plan- und Rundlaufgenauigkeit spanabhebend bearbeitet. Alternativ dazu ist auch vorgesehen, eine an dem Flansch der Radlagerung befestigte Bremsscheibe mit hoher Genauigkeit zu bearbeiten. Der mit dem Radflansch drehfest verbundene Dorn erzeugt dabei die notwendige Rotation des Flansches. Im weiteren sind mittels der erfindungsgemäßen Vorrichtung die Plan- und Rundlaufabweichungen unter Betriebsbedingungen des rotierenden Flansches bzw. der rotierenden Bremsscheibe an dem Flansch in dem mit Betriebsvorspannung vorgespannten Lager mit geeigneten Messmitteln überprüfbar. Das Messen wird entweder nach der spanabhebenden Bearbeitung im Fertigungsbereich und/oder getrennt von der spanabhebenden Bearbeitung in der Qualitätskontrolle vorgenommen.

Vorzugsweise ist das Spannelement bei rotierendem Dorn radial gegen den Außenring vorspannend beweglich. Die radiale Vorspannung wird somit nicht im statischen Zustand des Lagers, sondern erst dann auf das Lager ausgeübt, wenn der Innenring relativ zu dem an der Vorrichtung festen Außenring rotiert und die Wälzkörper sich an den Laufbahnen abwälzen. Punktförmige Markierungen durch die Wälzkörper in den Laufbahnen der Lagerringe sind somit vermieden. Die Laufqualität und somit die Lebensdauer der Radlagerung ist erheblich erhöht.

Eine Voraussetzung ist demnach das rotierende Antreiben der Innenringe gegen den oder die an der Vorrichtung festen Außenring(e). Der Dorn treibt dazu den Flansch an und wird je nach Ausführung der Vorrichtung axial von Seiten der axial nach außen von dem Radlager weggerichteten Planfläche des Flansches oder aus einer dazu axial entgegengesetzten Richtung an die Radlagerung herangeführt. Zwischen dem Dorn und dem Flansch, alternativ zwischen dem Dorn und einem konzentrisch innen zu den Innenringen sitzenden hohlzylindrischen Abschnitt an dem Flansch oder zwischen dem Dorn und den Innenringen wird entweder eine formschlüssige oder einer reib-kraftschlüssige Drehverbindung hergestellt. Radlagerungen für angetriebene Räder weisen in der Regel innenumfangsseitig an dem axial durch die Innenringe greifenden und die Innenringe radial und axial stützenden Abschnitt des Flansches eine Kerbverzahnung o.ä. für den Eingriff des Antriebes auf. Diese Innenverzahnung verzahnung o.ä. für den Eingriff des Antriebes auf. Diese Innenverzahnung wird bevorzugt bei der Bearbeitung der Radlager in der erfindungsgemäßen Vorrichtung für den Antrieb durch den Dorn genutzt. Der Dorn ist für diese Anwendung mit einer Außenverzahnung versehen, mit der der Dorn in die Innenverzahnung an dem Flansch eingreift und über die ein Formschluss hergestellt ist. Fehlt eine derartige Kerbverzahnung, sind alle denkbaren kraft-reibschlüssigen und weitere formschlüssig und lösbare Verbindungen zwischen dem Dorn und dem Flansch bzw. dem/den Innenring(en) vorgesehen.

Weitere Ausgestaltungen sowie Ausführungsformen der Erfindung sind in dem Abschnitt detaillierte Beschreibung der Zeichnungen näher erläutert.

Die Erfindung sieht weiter ein Verfahren zum spielfreien Vorspannen eines Radlagers mit einer Vorrichtung nach Anspruch 1 oder 2 vor. Dabei, sind im einzelnen folgende Verfahrensschritte vorgesehen:
- Das Radlager wird zunächst mit dem Außenring gegen einen axialen Anschlag der Vorrichtung axial in die Vorrichtung eingeführt. Zwischen der Spanneinrichtung und dem Außendurchmesser des Außenringes des Radlagers liegt zunächst ein großes radiales Spiel vor, so dass das Radlager mit dem Außenring in die Spanneinrichtung axial bis an den Anschlag eingeführt werden kann. An dem Anschlag wird das Lager zunächst ausgerichtet, deshalb ist vorzugsweise eine Dreipunktanlage des Anschlages vorgesehen.
- Die Spanneinrichtung spannt die Radlagereinheit zunächst ausschließlich zum Festhalten in der Vorrichtung ein. Dabei sind die durch die Spanneinrichtung aufgebrachten Einspannkräfte so gering, dass keine elastischen Verformungen des Außenringes und somit keine Veränderungen des Lagerspieles entstehen.
- Der Dorn wird vor, zeitgleich oder nach dem Einspannen des Außenringes in die Spanneinrichtung an den Flansch herangeführt und mit dem Flansch in einen Kraft-Reibschluss oder in einen Formschluss gebracht.
- Der Flansch wird mittels des Dornes um die Rotationsachse rotierend angetrieben.
- Der Außenring wird mittels des Spannwerkzeuges bei rotierendem Dorn und somit bei rotierendem Flansch radial soweit durch Einschnüren verformt, bis das eingespannte Lager spielfrei und vorgespannt ist und wahlweise weiter:
- Der rotierende Flansch oder wahlweise die an dem Flansch befestigte Bremsscheibe wird an dem vorgespannten Lager ggf. spanabhebend bearbeitet und/oder geprüft.

### Kurze Beschreibung der Zeichnungen

Nachfolgend werden weitere Ausgestaltungen sowie Ausführungsbeispiele der Erfindung näher beschrieben. Es zeigen im einzelnen:
- Figur 1: eine Frontalansicht einer erfindungsgemäßen Vorrichtung,
- Figur 2: die Vorrichtung nach Figur 1 in einer Schnittdarstellung gemäß der Linie II-II aus Figur 1 ohne Spannelement,
- Figur 3: die Vorrichtung nach Figur 1 mit einem Spannelement in Form eines Spannringes,
- Figur 4: die Vorrichtung gemäß Figur 1 mit einem alternativen Spannelement in Form von radial wirkenden Kolben,
- Figur 5: die Vorrichtung nach Figur 1 mit einem weiteren alternati- ven Spannelement in Form einer hydraulischen Druck- kammer und
- Figur 6: eine weitere erfindungsgemäße Vorrichtung, bei der die Spannelemente durch eine innenelastische hydraulische Druckkammer gebildet sind und bei der der Dorn mittels Spreizbacken reib-kraftschlüssig gegen den Flansch an- liegt.

### Detaillierte Beschreibung der Zeichnungen

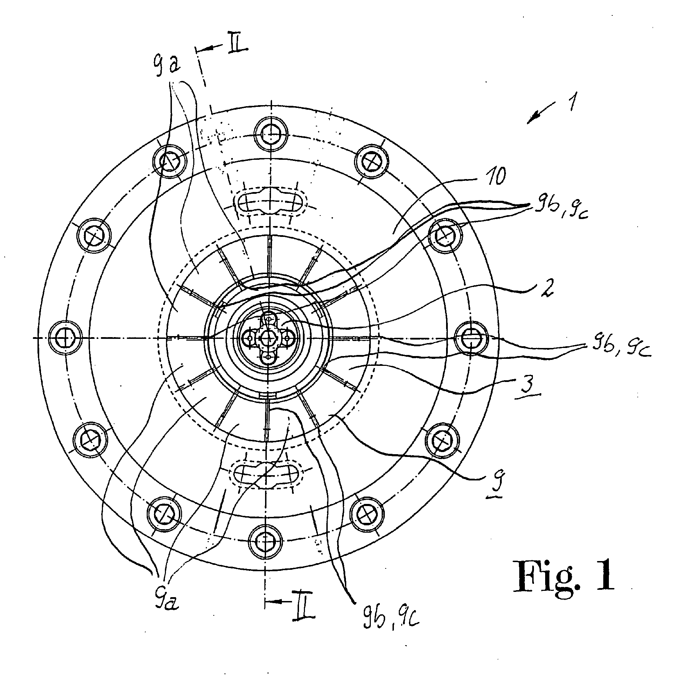

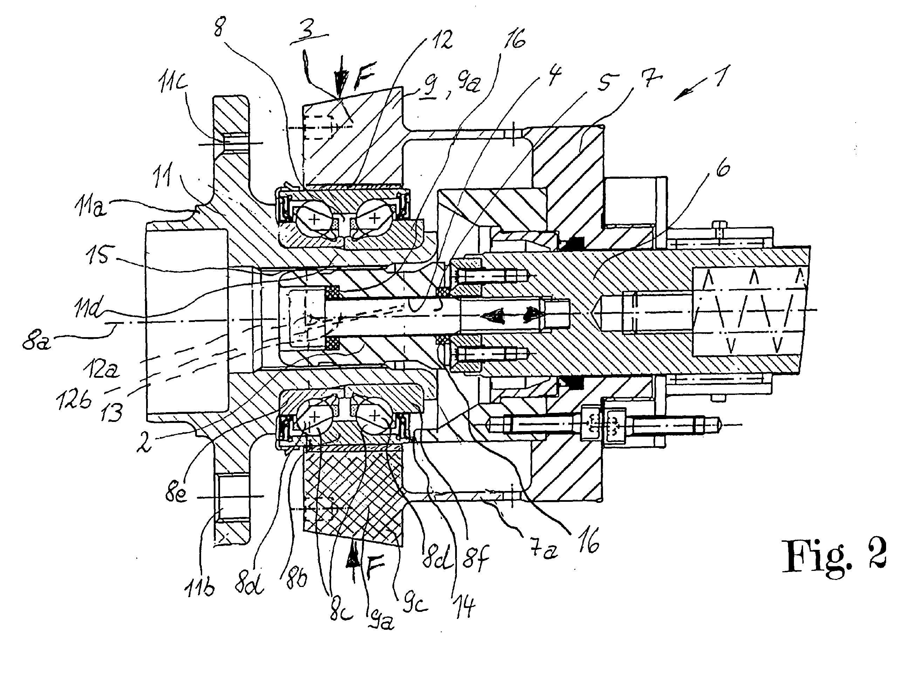

Figur 1 zeigt eine Frontalansicht einer erfindungsgemäßen Vorrichtung 1 und in Figur 2 ist ein Längsschnitt durch diese Vorrichtung 1 dargestellt. Die Vorrichtung 1 ist im wesentlichen aus einem relativ zu der Vorrichtung drehbaren Dorn 2 und aus einer Spanneinrichtung 3 gebildet. Der Dorn 2 ist rotationssymmetrisch ausgeführt und mit einer axialen Durchgangsbohrung 4 versehen. Durch die Durchgangsbohrung 4 greift ein Axialbolzen 5 hindurch. Der Axialbolzen 5 ist axial in eine Antriebswelle 6 eingeschraubt. Die Antriebswelle 6 ist relativ zur Vorrichtung und damit zu einem Träger 7 um die Rotationsachse 8a eines Radlagers 8 in dem Träger 7 gelagert. Zu dem Träger 7 ist die Spanneinrichtung 3 in Form eines Klemmfutters 9 fest. Das Klemmfutter 9 weist mehrere umfangsseitig um die Rotationsachse 8a gleichmäßig verteilte Spannbacken 9a auf.

In Figur 1 ist die Vorrichtung 1 ohne Radlager und mit einer Frontplatte 10 dargestellt. Die Frontplatte 10 fehlt in der zeichnerischen Darstellung nach Figur 2. Wie insbesondere aus Figur 1 ersichtlich ist, ist jede der Spannbacken 9a zu einer umfangsseitig benachbarten Spannbacke 9a durch einen Spalt 9b getrennt. Jeder Spalt 9b ist mit einem elastischen Material 9c, beispielsweise einem hochelastischen Elastomer, ausgefüllt. Das elastische Material 9c ist vorzugsweise flankenseitig an die Spannbacken 9b aufvulkanisiert bzw. in die Spalte 9b eingespritzt. Wie aus der Darstellung nach Figur 2 ersichtlich ist, sind die Spannbacken 9a an einem hohlzylindrischen und einmaterialig mit den Spannbacken ausgebildeten elastischen Ring befestigt, der sich axial von den Spannbacken 9a zu dem Träger 7 erstreckt und an dem Träger 7 fest ist.

Das Radlager 8 ist aus einem Außenring 8b, Wälzkörpern 8c in Form von Kugeln, Kugelkäfigen 8d, Innenringen 8e und 8f und einem Flansch 11 gebildet. Der Flansch 11 weist einen Zentriersitz 11 a für eine nicht dargestellte Felge eines Fahrzeugrades, Flanschbohrungen 11 b und 11 c sowie einen einteilig mit dem Flansch 11 ausgebildeten hohlzylindrischen Abschnitt 11 d auf. Die Innenringe 8e und 8f sitzen konzentrisch und fest auf dem Abschnitt 11 d. Ein Bördelbord 11 e spannt die Innenringe 8e und 8f axial gegeneinander vor.

Ein Zwischenring 12 sitzt radial zwischen den Spannbacken 9a und dem Außenring 8b. Der Zwischenring ist hohlzylindrisch und sehr dünnwandig ausgeführt sowie konzentrisch zu dem Außenring 8b angeordnet. In Umfangsrichtung des Zwischenringes 12 ist der Zwischenring so geschlitzt, dass zwischen seinen umfangsseitig aufeinander zuweisenden Enden 12a und 12b ein Ausgleichsspalt 13 ausgebildet ist. Durch den Einsatz eines derartigen Zwischenringes 12 ist die Spanneinrichtung 3 sind in die Vorrichtung verschiedene Radlager einsetzbar, deren Außenringe einen Außendurchmesser in einem Bereich von Null der Wanddicke bis zu dem doppelten Betrag der Wanddicke des Zwischenringes 12 variiert. Es ist auch denkbar, Zwischenringe mit größerer oder kleinerer radialer Wandstärke als mit der Wandstärke einzusetzen, die der Zwischenring 12 aufweist.

Mit den in Pfeilrichtung wirkenden Kräften F spannen die Spannbacken 9a radial in Richtung der Rotationsachse 8a zu. Das Radlager 8 wird zunächst mittels geringer Kräfte in die Vorrichtung 1 eingespannt, wobei das Radlager 8 an drei der Anschläge 14, von denen nur einer zeichnerisch dargestellt ist, ausgerichtet ist. Der Dorn 2 ist mit der Antriebswelle 6 in die mit dem Doppelpfeil gekennzeichneten axialen Richtungen beweglich und kann somit in einen formschlüssigen Eingriff mit dem Abschnitt 11 d gebracht werden. Der Formschluss zwischen dem Abschnitt 11 d und dem Dorn 2 ist durch eine Kerbverzahnung 15 hergestellt. Axialer Versatz zwischen der Mittenachse des Dornes 2 und der Rotationsachse des Innenringes 8e werden durch den kardanisch auf dem Axialbolzen gelagerten Dorn 2 über gummielastische Ausgleichselemente 16 ausgeglichen. Der Dorn 2 ist dazu mit der zylindrischen Wand der Durchgangsbohrung 4 zu dem Axialbolzen 5 beabstandet schwimmend auf den sich am Axialbolzen 5 abstützenden Ausgleichselementen 16 gelagert.

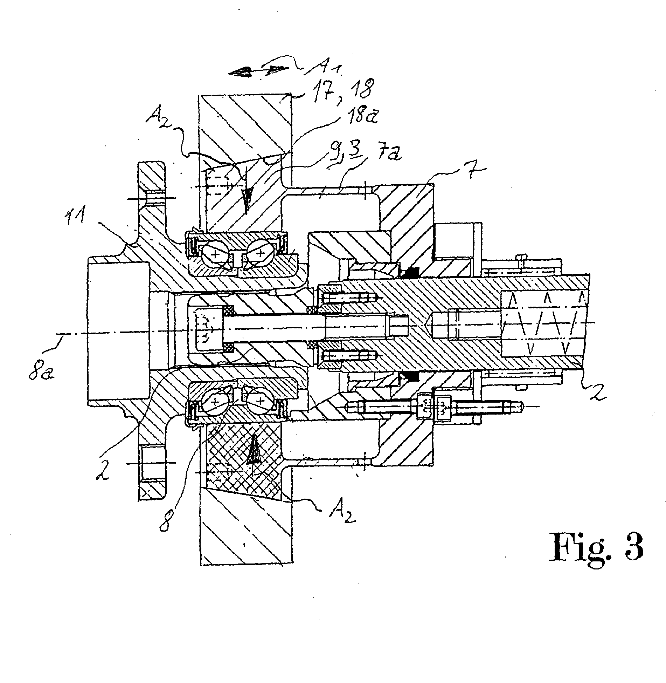

Die in Figur 2 mit F gekennzeichneten Kräfte auf die Spannbacken 9a sind mittels wenigstens eines Spannelementes 17 der Vorrichtung 1 erzeugt. Nachfolgend sind unterschiedliche Ausgestaltungen der Erfindung beschrieben, in denen verschiedene der Spannelemente vorgesehen sind. Gemäß der Darstellung nach Figur 3 ist das Spannelement 17 ein konzentrisch zu den Spannbacken angeordneter starrer Spannring 18. Der Spannring 18 umgreift die Spannbacken 9a radial außen sowie umfangsseitig geschlossen. An dem Spannring 18 ist ein Innenkonus 18a ausgebildet. Der Spannring 18 ist zu den Spannbacken 9a und dabei axial gleich gerichtet mit der Rotationsachse 8a gegen die Spannbacken 9a und von den Spannbacken 9a weg verschiebbar. Zum Zuspannen der Spanneinrichtung 3 wird der Spannring 18 axial gegen die Spannbacken 9a gedrückt und liegt dabei radial außen zumindest abschnittsweise an den Spannbacken 9a an. Die möglichen Bewegungsrichtungen des Spannringes 18 sind in Figur 3 durch einen mit A₁ gekennzeichneten Doppelpfeil markiert. Die Spannbacken 9a durch den Kontakt zu dem Innenkonus 18a bei bewegtem Spannring gezwungen, in die mit dem Pfeil A₂ gekennzeichnete Richtung auszuweichen und schnüren den Außenring 8b elastisch ein.

Die durch die Zuspannkräfte umfangsseitig über die Spalte 9b einander angenäherten Spannbacken 9a, komprimieren das elastische Material 9c. In dem elastischen Material 9c liegt somit während des Vorspannens des Radlagers 8 eine Kompressionsspannung vor, die die Spannbacken 9a, nach dem Entfall der Zuspannkräfte umfangsseitig voneinander entfernt und das Radlager 8 somit frei gibt.

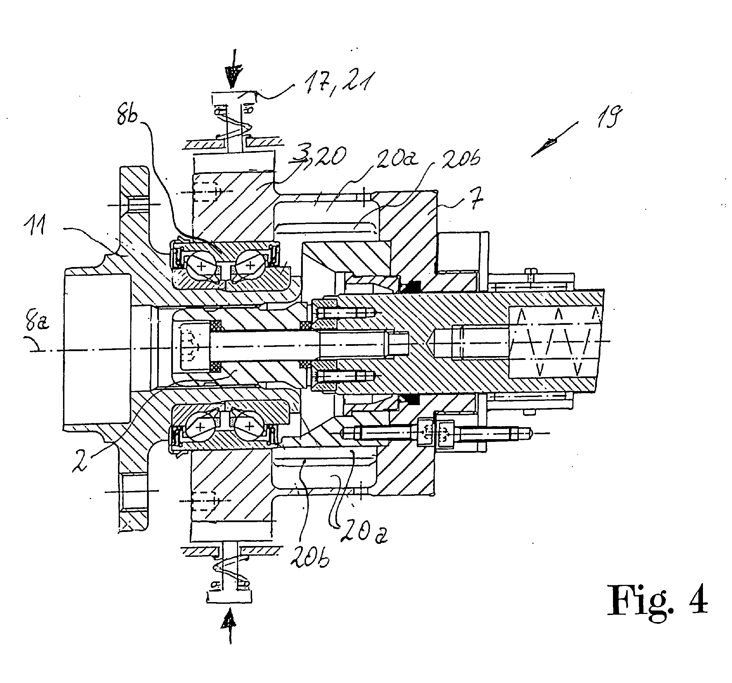

Figur 4 zeigt eine Vorrichtung 19, deren Aufbau im wesentlichen dem Aufbau der Vorrichtung 1 entspricht. An im Vergleich zu den Spannbacken 9a der Vorrichtung 1 leicht modifizierten Spannbacken 20 liegen Spannelemente 17 in Form von hubbeweglichen Kolben 21 an. Auf die Kolben 21 wirkt beim Einspannen in die Vorrichtung 19 und beim Vorspannen des Radlagers 8 in der Vorrichtung 19 eine nicht weiter dargestellte hydraulisch wahlweise mechanisch initiierte Kraft. Die Spannbacken 20 weichen dabei radial elastisch in Richtung des Außenringes 8b aus und spannen diesen vor bzw. schnüren diesen ein. Jede der Spannbacken 20 ist elastisch mittels eines Hebels 20a zu dem Träger 7 fest. Die Hebel 20a sind umfangsseitig durch Längsschlitze 20b voneinander getrennt.

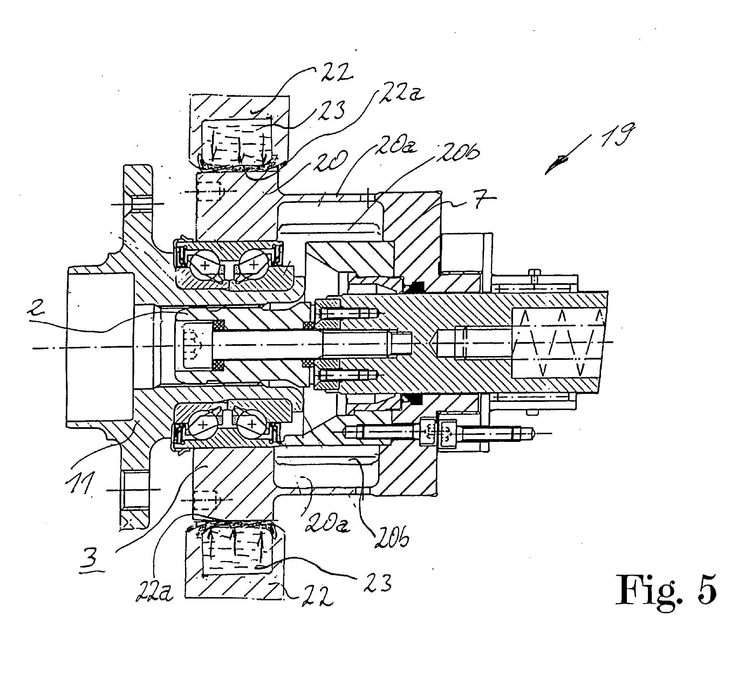

Figur 5 zeigt die Vorrichtung 19 mit einer weiteren Ausgestaltung eines Spannelementes 17. Das Spannelement 17 ist eine die Spannbacken 20 umfangsseitig um die Rotationsachse 8a umfassende hydraulische Druckkammer 22. Die Druckkammer 22 ist unter Druck mit einer hydraulischen Druckflüssigkeit 23 befüllt. Der hydraulische Druck in der Druckkammer 22 bewirkt, dass sich die Druckkammer 22 an ihrer schwächsten Stelle auswölbt. Die schwächste Stelle der Druckkammer 22 ist die radial nach innen gewandte dünne Wandung (wahlweise auch ein oder mehrere radial bewegliche(r) Kolben) 22a, die sich radial nach innen auswölbt und die Spannbacken 20 beaufschlagt.

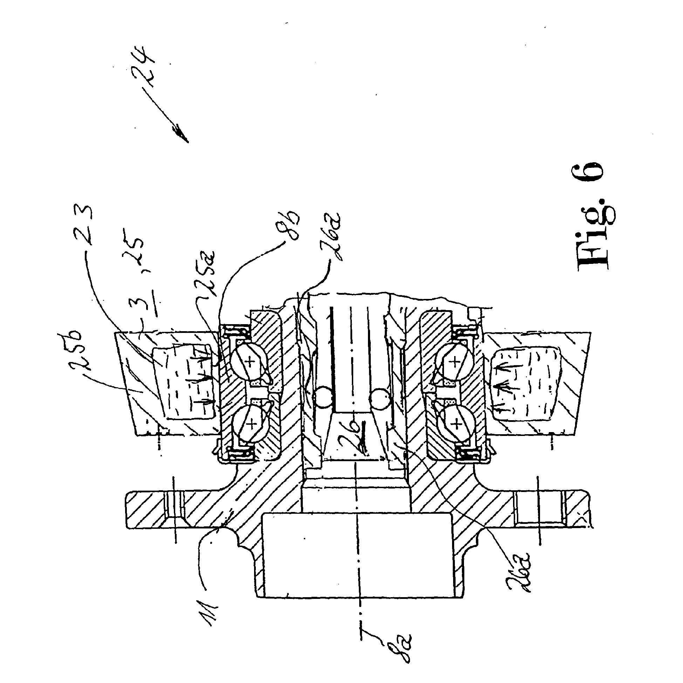

Figur 6 zeigt eine Vorrichtung 24 teilweise im Schnitt. Die Vorrichtung 24 weist als Spanneinrichtung 3 eine hydraulische Druckkammer 25 auf, die mit einer hydraulischen Druckflüssigkeit 23 gefüllt ist. Unter Druck wölbt sich die dünne Wandung 25a der Druckkammer 25 radial nach innen ein und schnürt den Außenring unter hohem Druck so ein, dass das Radlager 8 vorgespannt ist. Die radial außen liegende dicke Wandung 25b der Druckkammer 25 bleibt auch unter hohen Drücken starr. Der Flansch 11 des Radlagers 8 ist während des radialen Vorspannens des Außenringes 8b kraft-reibschlüssig mit einem Dorn 26 in Verbindung und rotiert mit diesem um die Rotationsachse 8a. Der Kraft-Reibschluss zwischen dem Dorn 26 und dem Flansch 11 ist durch ein radiales Aufspreizen des Dornes 26 erzeugt, wozu der Dorn 26 radial nach außen bewegliche Spreizbacken 26a aufweist. Über die Spreizbacken ist Spanndurchmesser des Dornes 26 variabel, so dass der Dorn 26 auch zu Radiagern mit sich zueinander unterscheidenden Innenabmessungen des Flansches adaptiv ist. Denkbar sind für diese Zwecke auch adaptive Dorne, die mit durchmesserfesten oder durchmesservariablen Ausgleichringen, z.B. aus Gummi, versehen sind.

### Bezugszeichen

- 1: Vorrichtung
- 2: Dorn
- 3: Spanneinrichtung
- 4: Durchgangsbohrung
- 5: Axialbolzen
- 6: Antriebswelle
- 7: Träger
- 7a: Ring
- 8: Radlager
- 8b: Außenring
- 8c: Wälzkörper
- 8d: Kugelkäfig
- 8e: Innenring
- 8f: Innenring
- 9: Klemmfutter
- 9a: Spannbacke
- 9b: Spalt
- 9c: elastisches Material
- 10: Frontplatte
- 11: Flansch
- 11 a: Zentriersitz
- 11 b: Flanschbohrung
- 11c: Flanschbohrung
- 11 d: Abschnitt

- 12: Zwischenring
- 12a: Ende
- 12b: Ende
- 13: Ausgleichsspalt
- 14: Anschlag
- 15: Kerbverzahnung
- 16: Ausgleichselement

- 17: Spannelement
- 18: Spannring
- 18a: Innenkonus
- 19: Vorrichtung
- 20: Spannbacke
- 20a: Hebel
- 20b: Längsschlitz
- 21: Kolben
- 22: Druckkammer
- 22a: Wandung
- 23: Druckflüssigkeit
- 24: Vorrichtung
- 25: Druckkammer
- 25a: Wandung
- 25b: Wandung
- 26: Dorn
- 26a: Spreizbacke

## Patentansprüche

1. Vorrichtung (1, 19, 24) zum Vorspannen eines Radlagers (8), mit einem zumindest zeitweise um eine Rotationsachse (8a) des Radlagers (8) zu einer Spanneinrichtung (3) rotierenden Dorn (2, 26), wobei die Spanneinrichtung (3) das Radlager (8) in der Vorrichtung (1, 19, 24) vorspannt und wobei der Dorn (2, 26) einen in einem Außenring (8b) des Radlagers (8) drehbar gelagerten Flansch (11) zumindest dann in eine Drehbewegung um die Rotationsachse (8a) des Radlagers (8) versetzt, wenn das Radlager (8) in der Vorrichtung (1, 19, 24) vorgespannt ist, wobei die Spanneinrichtung (3) rotationsfest zu der Vorrichtung (1, 19, 24) angeordnet und zum Vorspannen des Radlagers (8) in der Vorrichtung (1, 19, 24) von außen radial in Richtung der Rotationsachse (8a) gegen den Außenring (8b) beweglich ist, wobei die Spanneinrichtung (3) mehrere gleichmäßig am Umfang um die Rotationsachse (8a) verteilte Spannbacken (9a, 20) aufweist und wobei die Spannbacken (9a, 20) miteinander synchron radial von außen in Richtung der Rotationsachse (8a) beweglich sind und dabei der Außenring (8b) zumindest teilweise mittels der Spannbacken (9a, 20) wenigstens elastisch durchmesserverringernd einschnürbar ist und die Spannbacken (9a, 20a) mittels wenigstens eines Spannelementes (17) radial in Richtung der Rotationsachse (8a) beaufschlagbar sind, **dadurch gekennzeichnet, dass** das Spannelement (17) ein konzentrisch zu den Spannbacken (9a) angeordneter und dabei die Spannbacken (9a) radial außen sowie umfangsseitig geschlossen umgreifender starrer Spannring (18) ist, wobei der Spannring (18) einen Innenkonus (18a) aufweist und relativ zu den Spannbacken (9a) und dabei axial gleichgerichtet mit der Rotationsachse (8a) gegen die Spannbacken (9a) verschiebbar ist und wobei der Innenkonus (18a) radial außen an den Spannbacken (9a) zumindest abschnittsweise anliegt und dabei die Spannbacken (9a) mittels des axial beweglichen Spannringes (18) radial nach innen zwangsbeweglich sind.

2. Vorrichtung nach Anspruch 1, **gekennzeichnet durch** eine den Außenring (8b) elastisch vorspannende Spanneinrichtung (3).

3. Vorrichtung nach Anspruch 1, **dadurch gekennzeichnet, dass** die Spanneinrichtung bei rotierendem Dorn (2, 26) radial gegen den Außenring (8b) vorspannend beweglich ist.

4. Vorrichtung nach Anspruch 1, **dadurch gekennzeichnet, dass** jede der Spannbacken (9a, 20) zu einer umfangsseitig benachbarten Spannbacken (9a, 20) durch einen Spalt (9b) getrennt ist.

5. Vorrichtung nach Anspruch 4, **dadurch gekennzeichnet, dass** der Spalt (9b) mit einem elastischen Material (9c) ausgefüllt ist, wobei die zueinander benachbarten Spannbacken (9a) mittels des elastischen Materials (9c) miteinander umfangsseitig verbunden sind.

6. Vorrichtung nach Anspruch 1, **dadurch gekennzeichnet, dass** jede der Spannbacken (20) mit einem Hebel (20a) relativ zu dem drehenden Dorn (2) ortsfest an der Vorrichtung (19) befestigt ist.

7. Vorrichtung nach Anspruch 6, **dadurch gekennzeichnet, dass** der Hebel (20a) an einer von dem Flansch (11) abgewandten Seite an der Spannbacke (20) befestigt ist und dass der Hebel (20a) dabei axial von der Spannbacke (20a) weg an der Vorrichtung (19) fest ist.

8. Vorrichtung (1, 19, 24) zum Vorspannen eines Radlagers (8), mit einem zumindest zeitweise um eine Rotationsachse (8a) des Radlagers (8) zu einer Spanneinrichtung (3) rotierenden Dorn (2, 26), wobei die Spanneinrichtung (3) das Radlager (8) in der Vorrichtung (1, 19, 24) vorspannt und wobei der Dorn (2, 26) einen in einem Außenring (8b) des Radlagers (8) drehbar gelagerten Flansch (11) zumindest dann in eine Drehbewegung um die Rotationsachse (8a) des Radlagers (8) versetzt, wenn das Radlager (8) in der Vorrichtung (1, 19, 24) vorgespannt ist, wobei die Spanneinrichtung (3) rotationsfest zu der Vorrichtung (1, 19, 24) angeordnet und zum Vorspannen des Radlagers (8) in der Vorrichtung (1, 19, 24) von außen radial in Richtung der Rotationsachse (8a) gegen den Außenring (8b) beweglich ist, wobei die Spanneinrichtung (3) mehrere gleichmäßig am Umfang um die Rotationsachse (8a) verteilte Spannbacken (9a, 20) aufweist und wobei die Spannbacken (9a, 20) miteinander synchron radial von außen in Richtung der Rotationsachse (8a) beweglich sind und dabei der Außenring (8b) zumindest teilweise mittels der Spannbacken (9a, 20) wenigstens elastisch durchmesserverringernd einschnürbar ist und die Spannbacken (9a, 20a) mittels wenigstens eines Spannelementes (17) radial in Richtung der Rotationsachse (8a) beaufschlagbar sind, **gekennzeichnet durch** mehrere Spannelemente (17), wobei jedes der Spannelemente (17) mindestens ein und dabei wenigstens einer der Spannbacken (20) zugeordneter sowie radial zur Rotationsachse (8a) hubbeweglicher Kolben (21) ist.

9. Vorrichtung nach Anspruch 8, **dadurch gekennzeichnet, dass** der Kolben (21) mittels durch den Druck einer hydraulischen Flüssigkeit initiierter Kräfte radial verschiebbar ist.

10. Vorrichtung nach Anspruch 8, **dadurch gekennzeichnet, dass** der Kol ben (21) mechanisch betätigt ist.

11. Vorrichtung (1, 19, 24) zum Vorspannen eines Radlagers (8), mit einem zumindest zeitweise um eine Rotationsachse (8a) des Radlagers (8) zu einer Spanneinrichtung (3) rotierenden Dorn (2, 26), wobei die Spanneinrichtung (3) das Radlager (8) in der Vorrichtung (1, 19, 24) vorspannt und wobei der Dorn (2, 26) einen in einem Außenring (8b) des Radlagers (8) drehbar gelagerten Flansch (11) zumindest dann in eine Drehbewegung um die Rotationsachse (8a) des Radlagers (8) versetzt, wenn das Radlager (8) in der Vorrichtung (1, 19, 24) vorgespannt ist, wobei die Spanneinrichtung (3) rotationsfest zu der Vorrichtung (1, 19, 24) angeordnet und zum Vorspannen des Radlagers (8) in der Vorrichtung (1, 19, 24) von außen radial in Richtung der Rotationsachse (8a) gegen den Außenring (8b) beweglich ist, wobei die Spanneinrichtung (3) mehrere gleichmäßig am Umfang um die Rotationsachse (8a) verteilte Spannbacken (9a, 20) aufweist und wobei die Spannbacken (9a, 20) miteinander synchron radial von außen in Richtung der Rotationsachse (8a) beweglich sind und dabei der Außenring (8b) zumindest teilweise mittels der Spannbacken (9a, 20) wenigstens elastisch durchmesserverringernd einschnürbar ist und die Spannbacken (9a, 20a) mittels wenigstens eines Spannelementes (17) radial in Richtung der Rotationsachse (8a) beaufschlagbar sind" **dadurch gekennzeichnet, dass** das Spannelement (17) wenigstens eine die Spannbacken 20 umfangsseitig um die Rotationsachse (8a) umfassende hydraulische Druckkammer (22) ist, wobei die Druckkammer 22 mit einer hydraulischen Druckflüssigkeit (23) befüllt sowie radial nach innen elastisch nachgiebig und zumindest radial nach außen starr gestaltet ist und wobei die Spannbacken (20) mittels der Druckkammer (22) radial nach innen zwangsbeweglich sind.

12. Vorrichtung (1, 19, 24) zum Vorspannen eines Radlagers (8), mit einem zumindest zeitweise um eine Rotationsachse (8a) des Radlagers (8) zu einer Spanneinrichtung (3) rotierenden Dorn (2, 26), wobei die Spanneinrichtung (3) das Radlager (8) in der Vorrichtung (1, 19, 24) vorspannt und wobei der Dorn (2, 26) einen in einem Außenring (8b) des Radlagers (8) drehbar gelagerten Flansch (11) zumindest dann in eine Drehbewegung um die Rotationsachse (8a) des Radlagers (8) versetzt, wenn das Radlager (8) in der Vorrichtung (1, 19, 24) vorgespannt ist, wobei die Spanneinrichtung (3) rotationsfest zu der Vorrichtung (1, 19, 24) angeordnet und zum Vorspannen des Radlagers (8) in der Vorrichtung (1, 19, 24) von außen radial in Richtung der Rotationsachse (8a) gegen den Außenring (8b) beweglich ist, **dadurch gekennzeichnet, dass** die Spanneinrichtung (3) wenigstens eine den Außenring (8b) des Radlagers (8) umfangsseitig um die Rotationsachse (8a) umfassende hydraulische Druckkammer (25) ist, wobei die Druckkammer (25) mit einer hydraulischen Druckflüssigkeit (23) befüllt sowie radial nach innen elastisch nachgiebig und zumindest radial nach außen starr gehalten ist und wobei der Außenring (8b) mittels der druckbeaufschlagten Druckkammer (25) radial nach innen elastisch durchmesserverringernd einschnürbar ist.

13. Vorrichtung nach Anspruch 12, **gekennzeichnet durch** eine den Außenring (8b) elastisch vorspannende Spanneinrichtung (3).

14. Verfahren zum Vorspannen eines Radlagers (8) mit einer Vorrichtung (1, 19, 24) nach Anspruch 1 oder 2, wobei das Radlager (8) einen zu einem Außenring (8b) des Radlagers (8) drehbar gelagerten Flansch (11) aufweist und wobei zu dem Flansch (11) wenigstens ein Innenring (8e) des Radlagers fest zugeordnet ist, **dadurch gekennzeichnet,**
a. **dass** das Radlager (8) zunächst mit dem Außenring (8b) gegen einen axialen Anschlag (14) der Vorrichtung (1, 19, 24) axial in die Spanneinrichtung (3) eingeführt und dann
b. die Spanneinrichtung (3) mit einer Einspannkraft ohne elastisches Verformen des Außenringes (8b) zum Halten des Radlagers (8) an der Vorrichtung (1, 19, 24) zugespannt wird, dann
c. der Flansch (11) mittels des Dornes (2, 26) um die Rotationsachse (8a) rotierend angetrieben wird und schließlich
d. der Außenring (8b) mittels der Spanneinrichtung (3) bei rotierendem Flansch (11) radial so weit durch Einschnüren verformt wird, bis das in der Vorrichtung eingespannte Radlager (8) spielfrei und vorgespannt ist.

## Claims

1. Apparatus (1, 19, 24) for prestressing a wheel bearing (8), having a mandrel (2, 26) which rotates at least temporarily about a rotational axis (8a) of the wheel bearing (8) with respect to a clamping device (3), the clamping device (3) prestressing the wheel bearing (8) in the apparatus (1, 19, 24), and the mandrel (2, 26) setting a flange (11) which is mounted rotatably in an outer ring (8b) of the wheel bearing (8) in a rotational movement about the rotational axis (8a) of the wheel bearing (8) at least when the wheel bearing (8) is prestressed in the apparatus (1, 19, 24), the clamping device (3) being arranged in a rotationally fixed manner with respect to the apparatus (1, 19, 24) and being movable from the outside radially in the direction of the rotational axis (8a) against the outer ring (8b) in order to prestress the wheel bearing (8) in the apparatus (1, 19, 24), the clamping device (3) having a plurality of clamping jaws (9a, 20) which are distributed uniformly around the rotational axis (8a) on the circumference, and the clamping jaws (9a, 20) being movable synchronously with one another radially from the outside in the direction of the rotational axis (8a), and it being possible for the outer ring (8b) to be constricted here in a manner which at least elastically reduces the diameter at least partially by means of the clamping jaws (9a, 20), and it being possible for the clamping jaws (9a, 20a) to be loaded radially in the direction of the rotational axis (8a) by means of at least one clamping element (17), **characterized in that** the clamping element (17) is a rigid clamping ring (18) which is arranged concentrically with respect to the clamping jaws (9a) and engages around the clamping jaws (9a) in the process radially to the outside and in a circumferentially closed manner, the clamping ring (18) having an inner cone (18a) and being displaceable relative to the clamping jaws (9a) and in the process axially aligned with the rotational axis (8a) against the clamping jaws (9a), and the inner cone (18a) bearing at least in sections against the clamping jaws (9a) radially on the outside, and the clamping jaws (9a) being positively movable radially to the inside by means of the axially movable clamping ring (18).

2. Apparatus according to Claim 1, **characterized by** a clamping device (3) which prestresses the outer ring (8b) elastically.

3. Apparatus according to Claim 1, **characterized in that**, when the mandrel (2, 26) is rotating, the clamping device can be moved radially against the outer ring (8b) in a prestressing manner.

4. Apparatus according to Claim 1, **characterized in that** each of the clamping jaws (9a, 20) is divided from a circumferentially adjacent clamping jaw (9a, 20) by a gap (9b).

5. Apparatus according to Claim 4, **characterized in that** the gap (9b) is filled with an elastic material (9c), the clamping jaws (9a) which adjoin one another being connected to one another circumferentially by means of the elastic material (9c).

6. Apparatus according to Claim 1, **characterized in that** each of the clamping jaws (20) is fastened in a stationary manner to the apparatus (19) relative to the rotating mandrel (2) by way of a lever (20a).

7. Apparatus according to Claim 6, **characterized in that** the lever (20a) is fastened to the clamping jaw (20) on a side which faces away from the flange (11), and **in that** the lever (20a) is fixed here on the apparatus (19) axially away from the clamping jaw (20a).

8. Apparatus (1, 19, 24) for prestressing a wheel bearing (8), having a mandrel (2, 26) which rotates at least temporarily about a rotational axis (8a) of the wheel bearing (8) with respect to a clamping device (3), the clamping device (3) prestressing the wheel bearing (8) in the apparatus (1, 19, 24), and the mandrel (2, 26) setting a flange (11) which is mounted rotatably in an outer ring (8b) of the wheel bearing (8) in a rotational movement about the rotational axis (8a) of the wheel bearing (8) at least when the wheel bearing (8) is prestressed in the apparatus (1, 19, 24), the clamping device (3) being arranged in a rotationally fixed manner with respect to the apparatus (1, 19, 24) and being movable from the outside radially in the direction of the rotational axis (8a) against the outer ring (8b) in order to prestress the wheel bearing (8) in the apparatus (1, 19, 24), the clamping device (3) having a plurality of clamping jaws (9a, 20) which are distributed uniformly around the rotational axis (8a) on the circumference, and the clamping jaws (9a, 20) being movable synchronously with one another radially from the outside in the direction of the rotational axis (8a), and it being possible for the outer ring (8b) to be constricted here in a manner which at least elastically reduces the diameter at least partially by means of the clamping jaws (9a, 20), and it being possible for the clamping jaws (9a, 20a) to be loaded radially in the direction of the rotational axis (8a) by means of at least one clamping element (17), **characterized by** a plurality of clamping elements (17), each of the clamping elements (17) being at least one piston (21) which is assigned here to at least one of the clamping jaws (20) and can be moved in a reciprocating manner radially with respect to the rotational axis (8a).

9. Apparatus according to Claim 8, **characterized in that** the piston (21) can be displaced radially by means of forces which are initiated by the pressure of a hydraulic fluid.

10. Apparatus according to Claim 8, **characterized in that** the piston (21) is actuated mechanically.

11. Apparatus (1, 19, 24) for prestressing a wheel bearing (8), having a mandrel (2, 26) which rotates at least temporarily about a rotational axis (8a) of the wheel bearing (8) with respect to a clamping device (3), the clamping device (3) prestressing the wheel bearing (8) in the apparatus (1, 19, 24), and the mandrel (2, 26) setting a flange (11) which is mounted rotatably in an outer ring (8b) of the wheel bearing (8) in a rotational movement about the rotational axis (8a) of the wheel bearing (8) at least when the wheel bearing (8) is prestressed in the apparatus (1, 19, 24), the clamping device (3) being arranged in a rotationally fixed manner with respect to the apparatus (1, 19, 24) and being movable from the outside radially in the direction of the rotational axis (8a) against the outer ring (8b) in order to prestress the wheel bearing (8) in the apparatus (1, 19, 24), the clamping device (3) having a plurality of clamping jaws (9a, 20) which are distributed uniformly around the rotational axis (8a) on the circumference, and the clamping jaws (9a, 20) being movable synchronously with one another radially from the outside in the direction of the rotational axis (8a), and it being possible for the outer ring (8b) to be constricted here in a manner which at least elastically reduces the diameter at least partially by means of the clamping jaws (9a, 20), and it being possible for the clamping jaws (9a, 20a) to be loaded radially in the direction of the rotational axis (8a) by means of at least one clamping element (17), **characterized in that** the clamping element (17) is at least one hydraulic pressure chamber (22) which encloses the clamping jaws (20) circumferentially about the rotational axis (8a), the pressure chamber (22) being filled with a hydraulic pressure fluid (23) and being of elastically compliant design radially to the inside and being of rigid design at least radially to the outside, and the clamping jaws (20) being positively movable radially to the inside by means of the pressure chamber (22).

12. Apparatus (1, 19, 24) for prestressing a wheel bearing (8) having a mandrel (2, 26) which rotates at least temporarily about a rotational axis (8a) of the wheel bearing (8) with respect to a clamping device (3), the clamping device (3) prestressing the wheel bearing (8) in the apparatus (1, 19, 24), and the mandrel (2, 26) setting a flange (11) which is mounted rotatably in an outer ring (8b) of the wheel bearing (8) in a rotational movement about the rotational axis (8a) of the wheel bearing (8) at least when the wheel bearing (8) is prestressed in the apparatus (1, 19, 24), the clamping device (3) being arranged in a rotationally fixed manner with respect to the apparatus (1, 19, 24) and being movable from the outside radially in the direction of the rotational axis (8a) against the outer ring (8b) in order to prestress the wheel bearing (8) in the apparatus (1, 19, 24), **characterized in that** the clamping device (3) is at least one hydraulic pressure chamber (25) which encloses the outer ring (8b) of the wheel bearing (8) circumferentially about the rotational axis (8a), the pressure chamber (25) being filled with a hydraulic pressure fluid (23) and being held in an elastically compliant manner radially to the inside and in a rigid manner at least radially to the outside, and it being possible for the outer ring (8b) to be constricted radially to the inside in a manner which elastically reduces the diameter by means of the pressure-loaded pressure chamber (25).

13. Apparatus according to Claim 12, **characterized by** a clamping device (3) which prestresses the outer ring (8b) elastically.

14. Method for prestressing a wheel bearing (8) with an apparatus (1, 19, 24) according to Claim 1 or 2, the wheel bearing (8) having a flange (11) which is mounted rotatably with respect to an outer ring (8b) of the wheel bearing (8), and at least one inner ring (8e) of the wheel bearing being assigned fixedly to the flange (11), **characterized**
a. **in that** the wheel bearing (8) is first of all introduced axially into the clamping device (3) with the outer ring (8b) against an axial stop (14) of the apparatus (1, 19, 24), and then
b. the clamping device (3) is applied with a clamping force without elastic deformation of the outer ring (8b) in order to hold the wheel bearing (8) on the apparatus (1, 19, 24), then
c. the flange (11) is driven by means of the mandrel (2, 26) so as to rotate about the rotational axis (8a), and finally
d. the outer ring (8b) is deformed radially by constriction by means of the clamping device (3) when the flange (11) is rotating, until the wheel bearing (8) which is clamped in the apparatus is play-free and prestressed.

## Revendications

1. Dispositif (1, 19, 24) pour le pré-serrage d'un palier de roue (8), comprenant un mandrin (2, 26) tournant au moins temporairement autour d'un axe de rotation (8a) du palier de roue (8) par rapport à un dispositif de serrage (3), le dispositif de serrage (3) pré-serrant le palier de roue (8) dans le dispositif (1, 19, 24) et le mandrin (2, 26) mettant alors au moins en rotation autour de l'axe de rotation (8a) du palier de roue (8) une bride (11) montée à rotation dans une bague externe (8b) du palier de roue (8), le dispositif de serrage (3) étant disposé de manière fixe en rotation par rapport au dispositif (1, 19, 24) et, pour pré-serrer le palier de roue (8) dans le dispositif (1, 19, 24), pouvant être déplacé radialement de l'extérieur dans la direction de l'axe de rotation (8a) contre la bague externe (8b), le dispositif de serrage (3) présentant plusieurs mâchoires de serrage (9a, 20) réparties uniformément sur la périphérie de l'axe de rotation (8a), et les mâchoires de serrage (9a, 20) étant déplaçables les unes avec les autres de manière synchrone radialement de l'extérieur dans la direction de l'axe de rotation (8a) et la bague externe (8b) pouvant ainsi être rétrécie au moins en partie au moyen des mâchoires de serrage (9a, 20) au moins élastiquement en réduisant son diamètre, et les mâchoires de serrage (9a, 20a) pouvant être sollicitées radialement dans la direction de l'axe de rotation (8a) au moyen d'au moins un élément de serrage (17), **caractérisé en ce que** l'élément de serrage (17) est une bague de serrage (18) rigide, disposée concentriquement par rapport aux mâchoires de serrage (9a) et venant ainsi en prise radialement à l'extérieur et de manière fermée sur la périphérie autour des mâchoires de serrage (9a), la bague de serrage (18) présentant un cône interne (18a) et pouvant être déplacée par rapport aux mâchoires de serrage (9a) et en l'occurrence dans le même sens axial que l'axe de rotation (8a) contre les mâchoires de serrage (9a), et le cône interne (18a) s'appliquant radialement à l'extérieur contre les mâchoires de serrage (9a) au moins en partie, et les mâchoires de serrage (9a) étant forcées de se déplacer radialement vers l'intérieur au moyen de la bague de serrage (18) déplaçable axialement.

2. Dispositif selon la revendication 1, **caractérisé par** un dispositif de serrage (3) pré-serrant élastiquement la bague externe (8b).

3. Dispositif selon la revendication 1, **caractérisé en ce que** le dispositif de serrage peut être déplacé avec pré-serrage radialement contre la bague externe (8b) lorsque le mandrin (2, 26) tourne.

4. Dispositif selon la revendication 1, **caractérisé en ce que** chacune des mâchoires de serrage (9a, 20) est séparée par une fente (9b) par rapport à une mâchoire de serrage adjacente (9a, 20) du côté de la périphérie.

5. Dispositif selon la revendication 4, **caractérisé en ce que** la fente (9b) est remplie d'un matériau élastique (9c), les mâchoires de serrage (9a) mutuellement adjacentes étant connectées les unes aux autres du côté de la périphérie au moyen du matériau élastique (9c).

6. Dispositif selon la revendication 1, **caractérisé en ce que** chacune des mâchoires de serrage (20) est fixée avec un levier (20a) par rapport au mandrin rotatif (2) de manière fixe sur le dispositif (19).

7. Dispositif selon la revendication 6, **caractérisé en ce que** le levier (20a) est fixé sur la mâchoire de serrage (20) au niveau d'un côté opposé à la bride (11) et **en ce que** le levier (20a) est en l'occurrence fixé axialement à l'écart de la mâchoire de serrage (20a) au dispositif (19).

8. Dispositif (1, 19, 24) pour le pré-serrage d'un palier de roue (8), comprenant un mandrin (2, 26) tournant au moins temporairement autour d'un axe de rotation (8a) du palier de roue (8) par rapport à un dispositif de serrage (3), le dispositif de serrage (3) pré-serrant le palier de roue (8) dans le dispositif (1, 19, 24) et le mandrin (2, 26) mettant alors au moins en rotation autour de l'axe de rotation (8a) du palier de roue (8) une bride (11) montée à rotation dans une bague externe (8b) du palier de roue (8), lorsque le palier de roue (8) est pré-serré dans le dispositif (1, 19, 24), le dispositif de serrage (3) étant disposé de manière fixe en rotation par rapport au dispositif (1, 19, 24) et, pour pré-serrer le palier de roue (8) dans le dispositif (1, 19, 24), pouvant être déplacé radialement de l'extérieur dans la direction de l'axe de rotation (8a) contre la bague externe (8b), le dispositif de serrage (3) présentant plusieurs mâchoires de serrage (9a, 20) réparties uniformément sur la périphérie de l'axe de rotation (8a), et les mâchoires de serrage (9a, 10) étant déplaçables les unes avec les autres de manière synchrone radialement de l'extérieur dans la direction de l'axe de rotation (8a) et la bague externe (8b) pouvant ainsi être rétrécie au moins en partie au moyen des mâchoires de serrage (9a, 20) au moins élastiquement en réduisant son diamètre, et les mâchoires de serrage (9a, 20a) pouvant être sollicitées radialement dans la direction de l'axe de rotation (8a) au moyen d'au moins un élément de serrage (17), **caractérisé par** plusieurs éléments de serrage (17), chacun des éléments de serrage (17) étant au moins un piston (21), et en l'occurrence associé au moins à l'une des mâchoires de serrage (20) et déplaçable avec une course radiale par rapport à l'axe de rotation (8a).

9. Dispositif selon la revendication 8, **caractérisé en ce que** le piston (21) peut être déplacé radialement au moyen de forces amorcées par la pression d'un liquide hydraulique.

10. Dispositif selon la revendication 8, **caractérisé en ce que** le piston (21) est actionné mécaniquement.

11. Dispositif (1, 19, 24) pour le pré-serrage d'un palier de roue (8), comprenant un mandrin (2, 26) tournant au moins temporairement autour d'un axe de rotation (8a) du palier de roue (8) par rapport à un dispositif de serrage (3), le dispositif de serrage (3) pré-serrant le palier de roue (8) dans le dispositif (1, 19, 24) et le mandrin (2, 26) mettant alors au moins en rotation autour de l'axe de rotation (8a) du palier de roue (8) une bride (11) montée à rotation dans une bague externe (8b) du palier de roue (8), lorsque le palier de roue (8) est pré-serré dans le dispositif (1, 19, 24), le dispositif de serrage (3) étant disposé de manière fixe en rotation par rapport au dispositif (1, 19, 24) et, pour pré-serrer le palier de roue (8) dans le dispositif (1, 19, 24), pouvant être déplacé radialement de l'extérieur dans la direction de l'axe de rotation (8a) contre la bague externe (8b), le dispositif de serrage (3) présentant plusieurs mâchoires de serrage (9a, 20) réparties uniformément sur la périphérie de l'axe de rotation (8a), et les mâchoires de serrage (9a, 10) étant déplaçables les unes avec les autres de manière synchrone radialement de l'extérieur dans la direction de l'axe de rotation (8a) et la bague externe (8b) pouvant ainsi être rétrécie au moins en partie au moyen des mâchoires de serrage (9a, 20) au moins élastiquement en réduisant son diamètre, et les mâchoires de serrage (9a, 20a) pouvant être sollicitées radialement dans la direction de l'axe de rotation (8a) au moyen d'au moins un élément de serrage (17), **caractérisé en ce que** l'élément de serrage (17) est au moins une chambre de pression hydraulique (22) comprenant les mâchoires de serrage (20) du côté de la périphérie de l'axe de rotation (8a), la chambre de pression (22) étant remplie d'un liquide de pression hydraulique (23) et étant configurée de manière flexible élastiquement radialement vers l'intérieur et de manière rigide au moins radialement vers l'extérieur et les mâchoires de serrage (20) étant forcées de se déplacer radialement vers l'intérieur au moyen de la chambre de pression (22).

12. Dispositif (1, 19, 24) pour le pré-serrage d'un palier de roue (8), comprenant un mandrin (2, 26) tournant au moins temporairement autour d'un axe de rotation (8a) du palier de roue (8) par rapport à un dispositif de serrage (3), le dispositif de serrage (3) pré-serrant le palier de roue (8) dans le dispositif (1, 19, 24) et le mandrin (2, 26) mettant alors au moins en rotation autour de l'axe de rotation (8a) du palier de roue (8) une bride (11) montée à rotation dans une bague externe (8b) du palier de roue (8), lorsque le palier de roue (8) est pré-serré dans le dispositif (1, 19, 24), le dispositif de serrage (3) étant disposé de manière fixe en rotation par rapport au dispositif (1, 19, 24) et, pour pré-serrer le palier de roue (8) dans le dispositif (1, 19, 24), pouvant être déplacé radialement de l'extérieur dans la direction de l'axe de rotation (8a) contre la bague externe (8b), **caractérisé en ce que** le dispositif de serrage (3) est au moins une chambre de pression hydraulique (25) entourant la bague externe (8b) du palier de roue (8) du côté de la périphérie de l'axe de rotation (8a), la chambre de pression (25) étant remplie d'un liquide de pression hydraulique (23) et étant maintenue de manière flexible élastiquement radialement vers l'intérieur et de manière rigide au moins radialement vers l'extérieur, la bague externe (8b) pouvant être rétrécie au moyen de la chambre de pression sollicitée en pression (25) en réduisant son diamètre de manière élastique radialement vers l'intérieur.

13. Dispositif selon la revendication 12, **caractérisé par** un dispositif de serrage (3) pré-serrant élastiquement la bague externe (8b).

14. Procédé pour pré-serrer un palier de roue (8) avec un dispositif (1, 19, 24) selon la revendication 1 ou 2, le palier de roue (8) présentant une bride (11) montée à rotation par rapport à une bague externe (8b) du palier de roue (8), et au moins une bague interne (8e) du palier de roue étant associée fixement à la bride (11), **caractérisé en ce que**
a. le palier de roue (8) est d'abord introduit avec la bague externe (8b) contre une butée axiale (14) du dispositif (1, 19, 24) axialement dans le dispositif de serrage (3), puis
b. le dispositif de serrage (3) est serré avec une force de serrage sans déformation élastique de la bague externe (8b) pour retenir le palier de roue (8) sur le dispositif (1, 19, 24), puis
c. la bride (11) est entraînée en rotation au moyen du mandrin (2, 26) autour de l'axe de rotation (8a) et finalement
d. la bague externe (8b) est déformée par rétrécissement radialement au moyen du dispositif de serrage (3) lorsque la bride (11) tourne, jusqu'à ce que le palier de roue (8) serré dans le dispositif soit sans jeu et pré-serré.
